# EUROPÄISCHE PATENTSCHRIFT

(11) **EP 0 615 113 B1**
(45) Veröffentlichungstag und Bekanntmachung des Hinweises auf die Patenterteilung: **03.06.1998**
(21) Anmeldenummer: 93103827.7
(22) Anmeldetag: 10.03.1993
(51) Int. Cl.: G01G 11/08

(54) **Gravimetrische Dosiervorrichtung für Schüttgüter**
Gravimetric dosing device for bulk materials
Dispositif pour le dosage de matériaux en vrac

(43) Veröffentlichungstag der Anmeldung: 14.09.1994
(73) Patentinhaber: Pfister GmbH, 86165 Augsburg (DE)
(72) Erfinder: Häfner, Hans Wilhelm, D-8890 Aichach-Walchshofen (DE)
(74) Vertreter: Fiener, Josef

(56) Entgegenhaltungen:
- EP-A- 0 530 797
- WO-A-92/03707
- CA-A- 2 077 507
- FR-A- 2 526 541
- GB-A- 2 127 566

## Beschreibung

Die Erfindung betrifft eine gravimetrische Dosiervorrichtung für Schüttgüter gemäß dem Oberbegriff des Patentanspruches 1.

Eine derartige Vorrichtung ist aus der CA-A-2,077,507 bekannt. Aus der DE-C-32 17 406 ist weiterhin eine Vorrichtung zum kontinuierlichen gravimetrischen Dosieren von schüttfähigem Gut bekannt, das über eine Aufgabeöffnung in Taschen eines in einem Gehäuse angeordneten, um eine vertikale Achse drehbaren Rotors geleitet und unter Zuführen von Druckluft über eine zur Aufgabeöffnung in Drehrichtung des Rotors versetzte Entleerungsöffnung entfernt wird. Das Gehäuse ist schwenkbar um eine im wesentlichen horizontale Achse gelagert und mit einer entfernt von dieser Achse angeordneten Kraftmeßvorrichtung verbunden, und an der Aufgabeöffnung und der Entleerungsöffnung ist je ein elastisches Anschlußglied vorgesehen. Die horizontale Achse verläuft dabei durch die Mitten der elastischen Anschlußglieder, so daß Kräfte, die durch Verwindungen bei der Belastung der Dosiervorrichtung auftreten könnten, unwirksam sind.

Mit einer derartigen Dosiervorrichtung läßt sich eine verhältnismäßig hohe Genauigkeit erzielen, sie ist jedoch relativ bauaufwendig. Zudem kann es bei Schüttgut mit hoher Feuchtigkeit oder bei klebrigem Schüttgut zu Brückenbildungen in den Taschen des Rotors kommen, was unter ungünstigen Bedingungen zu einer unzureichenden Austragung des Schüttguts und damit zu Verfälschungen der Meßwerte führen kann. Auch die Dosiervorrichtung gemäß der CA-A-2,077,507 benötigt mehrere Führungen zur Stabilisierung der Sektoren, um ein Kippen zu vermeiden, oder jeweils mehrere Lastzellen pro Sektor, so daß auch hier der Bauaufwand verbesserungsfähig ist. Demzufolge liegt der Erfindung die Aufgabe zugrunde, eine gravimetrische Dosiervorrichtung mit einfachem Aufbau und hoher Meßgenauigkeit anzugeben.

Diese Aufgabe wird erfindungsgemäß gelöst mit einer gravimetrischen Dosiervorrichtung mit den Merkmalen des Anspruchs 1 bzw. 2.

Durch die Ausbildung von durch Entkoppelungsstellen unabhängig bewegbaren Sektoren, die sich jeweils an ihrer Trennstelle auf eine gemeinsame Kraftmeßvorrichtung abstützen, kann der Rotor als einfacher Meßteller ausgelegt werden und läßt sich somit bei ausgezeichneter Meßgenauigkeit bedeutend einfacher herstellen. Die Meßgenauigkeit läßt sich durch die nebengeordnete Lösung ebenfalls steigern.

Bevorzugte Weiterbildungen der erfindungsgemäßen gravimetrischen Dosiervorrichtung sind in den Unteransprüchen gekennzeichnet.

Weitere Merkmale und Vorteile der erfindungsgemäßen Vorrichtung ergeben sich aus der nachfolgenden Beschreibung von Ausführungsbeispielen anhand der Zeichnungen. Es zeigen:
- Fig. 1: eine schematische, teilweise geschnittene Seitenansicht eines ersten Ausführungsbeispiels der erfindungsgemäßen Vorrichtung;
- Fig. 2: eine Draufsicht auf die Vorrichtung nach Fig. 1;
- Fig. 3: die Vorrichtung nach Fig. 1 mit einer ersten Modifizierung;
- Fig. 4: die Vorrichtung nach Fig. 1 mit weiteren Modifizierungen;
- Fig. 5: die Vorrichtung nach Fig. 1 in bevorzugter Weiterbildung;
- Fig. 6 bis 10: verschiedene Ausführungsformen für die Massenerfassung in Anwendung auf eine der Vorrichtungen gemäß den Fig. 1 bis 5;
- Fig. 11 und 12: Einzelheiten über die Ausgestaltung der Übergänge zwischen den einzelnen Dosiersektoren;
- Fig. 13: ein schematisches Diagramm der bei der erfindungsgemäßen Vorrichtung verwendeten Steuerung; und
- Fig. 14: ein Impulsdiagramm zur Erläuterung der bei der erfindungsgemäßen Vorrichtung verwendeten Zeitgabe.

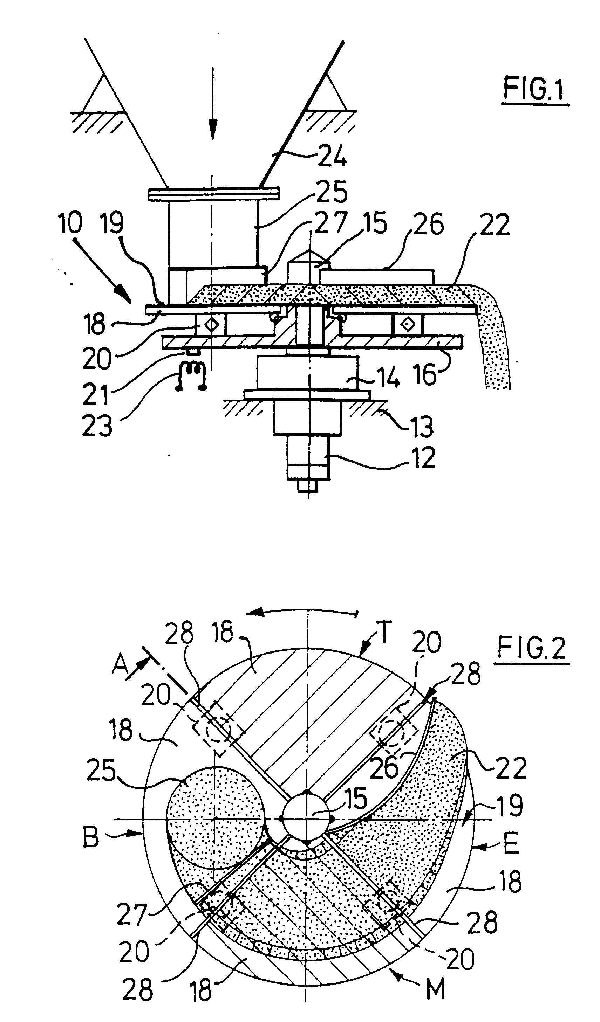

Die Fig. 1 und 2 zeigen eine erste Ausführungsform einer erfindungsgemäßen Sektoren-Dosiervorrichtung 10 mit einem bei diesem Ausführungsbeispiel in vier Sektoren 18 unterteilten Rotor 19 (nachstehend auch als Meßteller bezeichnet), der über noch im einzelnen zu beschreibende Kraftmeßvorrichtungen 20, nachstehend auch Lastzellen genannt, auf einem Drehteller 16 ruht, der von einem Motor 12, wahlweise über ein Getriebe 14 und eine Achse 15, mit einstellbarer bzw. geregelter Drehzahl angetrieben wird. Die Vorrichtung 10 ruht auf einer Basis 13, die ein Gestell oder dergleichen sein kann. Der Meßteller 19 weist wenigstens zwei Sektoren (180°) auf; es können jedoch auch drei Sektoren (120°) oder, wie hier dargestellt, vier Sektoren (90°-Teilung) oder eine höhere Anzahl vorgesehen sein.

Einseitig (in Fig. 1, links) über dem Meßteller 19 öffnet sich ein Schacht 25, dem von einem ebenfalls ortsfest angeordneten Behälter 24 fließfähiges Gut 22 zugeführt wird. Hierdurch wird die Beschickungsstation B gebildet. Dem Schacht 25 diametral gegenüberliegend ist eine Entleerungsstation E in Form eines geraden oder aber vorzugsweise gekrümmt ausgebildeten Abstreifers 26 stationär angeordnet, der das auf den Rotor 19 aufgebrachte Gut 22 vom Meßteller 19 abstreift, so daß dieser geleert ist, bevor er wiederum unter den Schacht 25 gelangt.

Insbesondere in Fig. 2 ist verdeutlicht, daß der Rotor oder Meßteller 19, wie zuvor erwähnt, beim Ausführungsbeispiel aus vier gleichen Sektoren 18 besteht, die unabhängig voneinander geringfügig vertikal beweglich sind und durch flexibel überbrückte Entkoppelungsstellen 28, insbesondere Radialschlitze getrennt sind sowie gemeinsam auf jeweils zugeordneten Kraftmeßvorrichtungen oder Lastzellen 20 aufgesetzt sind.

In der ersten der vier Phasen des Dosiervorgangs läuft ein Sektor 18 unter dem Schacht 25 durch, so daß er mit Gut 22 beladen wird. Das Gut 22 kann mittels einer ortsfesten, radial angeordneten Rakel 27 in seiner Höhe vergleichmäßigt und nach außen begrenzt werden.

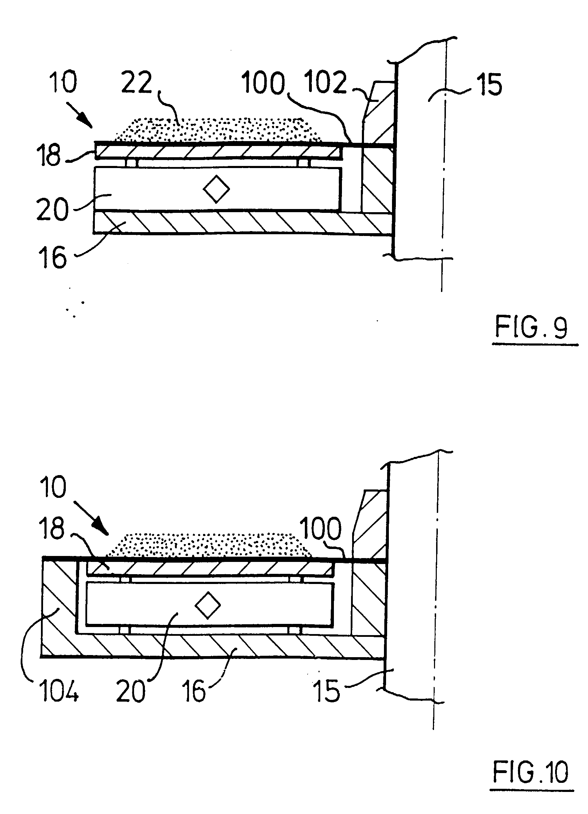

Nach einer Drehung des Meßtellers 19 um 90° im Gegenuhrzeigersinn wurde der soeben beschickte Sektor 18 in die mit M bezeichnete Meßposition gebracht, in der er weitgehend unbeeinflußt vom weiteren Beschicken oder Materialabzug des Meßtellers 19, nämlich des nächsten Sektors 18 (und auch von dem nachfolgenden Abwerfen des Guts 22 vom vorauseilenden Sektor) ist. Zu diesem Zeitpunkt wird nun in dieser Meßposition M die Masse des auf dem Sektor 18 befindlichen Guts 22 von den unterhalb des Sektors 18 befindlichen Lastzellen 20 bestimmt. Dabei ist zu beachten, daß praktisch eine statische Massebestimmung vorgenommen wird, da sich der Sektor 18 über die Lastzellen 20 auf dem Drehteller 16 abstützt. Die Lastzellen 20 sind hierbei so angeordnet, daß sie die Entkoppelungsstelle 28, hier je ein Radialschlitz zwischen benachbarten Sektoren 18, überbrücken. Der Radialschlitz ist hierbei durch eine elastische Abdeckung 100 (vgl. Fig. 9, 10) nach oben hin überdeckt.

In der dritten Phase des Massebestimmungsvorgangs gelangt der Sektor 18 nach einer weiteren Drehung um 90° in den die Entleerungsstation E bildenden Abwurfbereich (Fig. 2, rechts), in den das Gut 22 durch den Abstreifer 26 vom Meßteller 19 abgeworfen wird. Es ist zu beachten, wie vorstehend kurz erwähnt, daß das Abwerfen des Guts 22 von dem im Abwurfbereich befindlichen Sektor 18 praktisch keinen Einfluß auf die Massebestimmung für den nachfolgenden, sich im Meßbereich M befindlichen Sektor 18 hat.

In der vierten Phase des Massebestimmungsvorgangs gelangt schließlich der geleerte Sektor 18 in den Bereich T (Fig. 2, oben), in dem bevorzugt die unter ihm befindlichen Lastzellen 20 nochmals aktiviert werden und zwar zur Bestimmung des Leergewichtes (Tara) des dort befindlichen Sektors 18, der dann wieder in den Bereich des Schachtes 25 zur weiteren Beschickung einläuft.

Da auch das Leergewicht jedes Sektors - d. h. streng genommen die Masse des Sektors plus Restgut - laufend bestimmt wird, ist eine vollständige Entleerung nicht erforderlich. Es kann sogar absichtlich eine gewisse Schicht unterhalb des Abstreifers 26 durchlaufen, so daß sich kein Abrieb auf der Oberfläche des Meßtellers 19 ergibt.

In der vorstehenden Beschreibung wurden die vier Phasen des Massebestimmungsvorgangs für einen einzelnen Sektor 18 beschrieben. Selbstverständlich ist der Vorgang kontinuierlich, wobei sich nach einer Drehung von 90° im Gegenuhrzeigersinn ein jeweils anderer Sektor 18 in der jeweils nächsten Phase befindet. Es können auch mehr als vier Sektoren vorgesehen werden. Bei vollständiger Entleerung der Sektoren könnte auf die vierte Phase verzichtet werden.

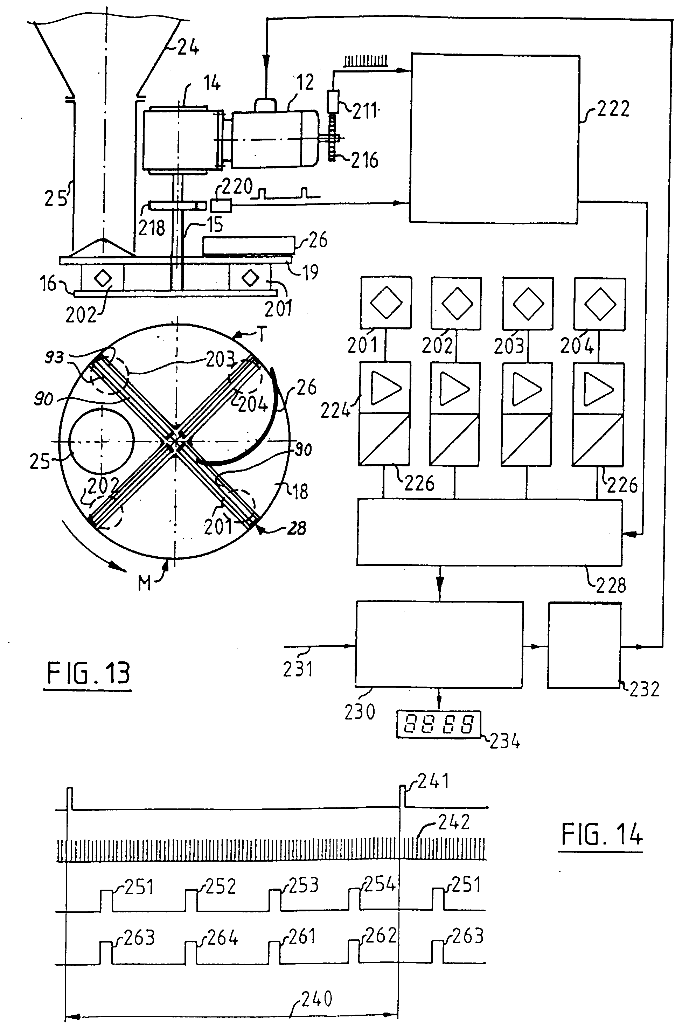

Die jeweilige Drehwinkelposition des Meßtellers 19 wird bevorzugt laufend durch bekannte Mittel festgestellt, beispielsweise durch vier an der Unterseite des Drehteller 16 umfangsmäßig um 90° verteilt angeordnete Magnete 21, die an einer Induktionsspule 23 vorbeilaufen. Hierdurch läßt sich der Zeitpunkt feststellen, in dem sich der Meßteller 19 in der in Fig. 2 gezeigten Position (und jeder weiteren um 90° verdrehten Position) befindet. Zu diesem Zeitpunkt wird dann der von den Lastzellen 20 aufgenommene Bruttomassenwert im Meßbereich M und der Tarawert im Tarabereich T festgestellt und unter Differenzbildung der zugeordneten Werte die tatsächliche, durch einen Sektor 18 geförderte Netto-Masse bestimmt (vgl. auch Fig. 13, 14).

Soll dabei in diskontinuierlicher Dosierung eine bestimmte Masse gefördert werden, dann ergibt sich diese durch Akkumulierung oder Addition der ermittelten Nettomassewerte. Bei einer kontinuierlichen gravimetrischen Dosierung werden die bestimmten Meßwerte für die einzelnen Sektoren mit der Zeit bzw. der Drehzahl des Meßtellers 19 in Beziehung gesetzt. Hiervon kann dann ein Regelsignal für den Motor 12 abgeleitet werden, um einen Sollwert für den Durchsatz einzuhalten.

Eine Vereinfachung der Berechnung kann dadurch erzielt werden, daß laufend ein Mittelwert für das Tara- oder Leergewicht bei T gebildet wird und dieser Mittelwert von den jeweiligen Messungen im Bereich M bzw. entsprechend vervielfacht von der Gesamtmasse abgezogen wird.

Zusammenfassend läßt sich somit sagen, daß mittels einer verhältnismäßig einfachen Dosiervorrichtung sehr genau eine Massebestimmung bei der Dosierung von fließfähigem Gut erzielt werden kann, dessen Eigenschaften sich in weiten Grenzen variieren können. So läßt sich auf diese Weise auch sehr grobkörniges Gut und Schüttgut mit verhältnismäßig schlechten Fließeigenschaften sehr gut dosieren.

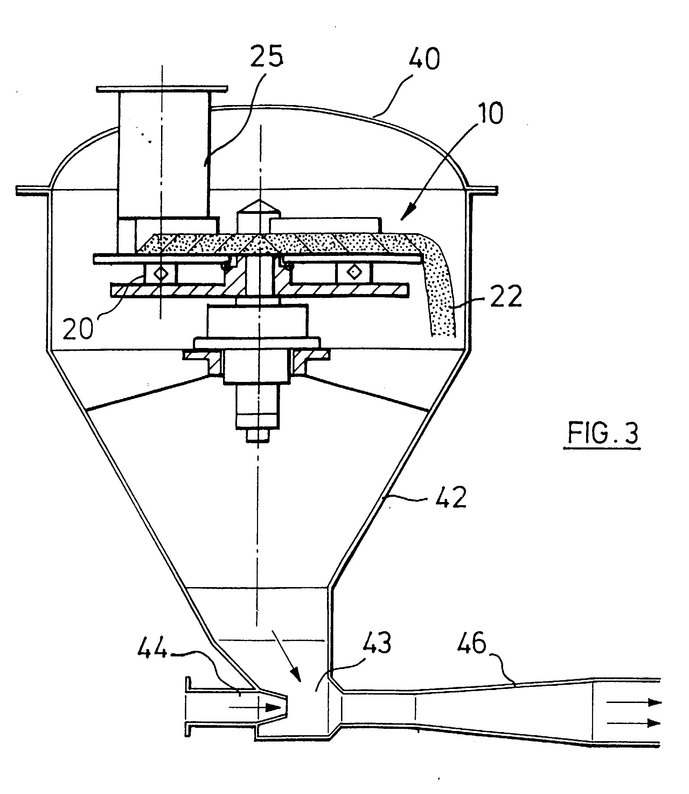

Die Fig. 3 bis 5 veranschaulichen Weiterbildungen, die bevorzugt im Zusammenhang mit der erfindungsgemäßen Vorrichtung nach Fig. 1 und 2 verwendet werden können.

So zeigt beispielsweise die Fig. 3 ein geschlossenes System, bei der die Sektoren-Dosiervorrichtung 10 in einem geschlossenen Gehäuse 40 untergebracht ist, das beispielsweise gleichzeitig einen Trichter 42 bildet, über den das von der Vorrichtung 10 abgeworfene Gut 22 in eine verengte Kammer 43 gelangt, aus der es mittels über eine Düse 44 zugeführter Druckluft pneumatisch über eine Ausgangsleitung 46 abgefördert werden kann.

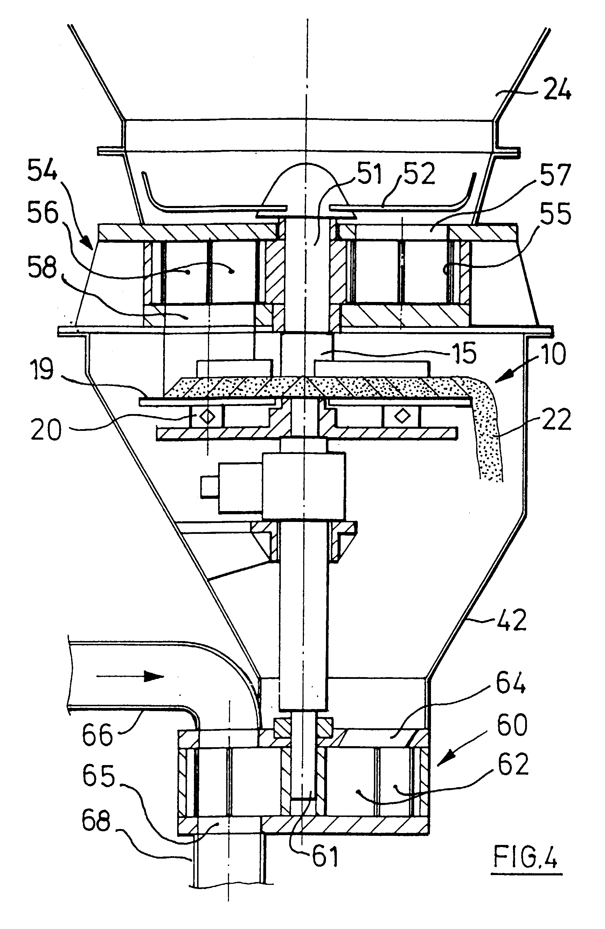

In Fig. 4 sind weitere Modifikationen und Weiterbildungen der erfindungsgemäßen Sektoren-Dosiervorrichtung 10 veranschaulicht, die die Beschickung der Vorrichtung einerseits und die Abförderung des dosierten Materials andererseits betreffen.

So besitzt die Welle 15 eine obere Verlängerung 51 zum Antrieb eines Zellenrades 55 einer Zellenradschleuse 54, wobei über eine obere Öffnung 57 im Gehäuse der Zellenradschleuse 54 Kammern 56 des Zellenrades 55 aus dem Behälter 24 gefüllt und nach Drehung um einen gewünschten Winkelbereich durch eine Entleerungsöffnung 58 an der Unterseite des Gehäuses 40 auf den Meßteller 19 der Vorrichtung 10 entleert werden.

Zusätzlich oder alternativ zu der Zellenradschleuse 54 kann am oberen Ende der Verlängerung 51 der Welle 15 ein Rührer 52 angebracht sein, dessen Rotation Dombildungen im Behälter 24 verhindert und die Gutzufuhr zur Zellenradschleuse 54 und aus dieser auf den Meßteller 19 vergleichmäßigt.

Alternativ zu der pneumatischen Düsenabförderung des dosierten Gutes gemäß Fig. 3 ist bei der Vorrichtung nach Fig. 4 wiederum eine Zellenradschleuse 60 vorgesehen, bei der dosiertes Gut 22 aus dem Trichter 42 über eine obere Öffnung 64 in die Zellenradkammern 62 gelangt und aus diesen über eine Auslaßöffnung 65 an der Unterseite herausfällt, sofern es nicht durch über eine Druckleitung 56 angelegte Druckluft in eine pneumatische Abförderleitung 68 geblasen wird.

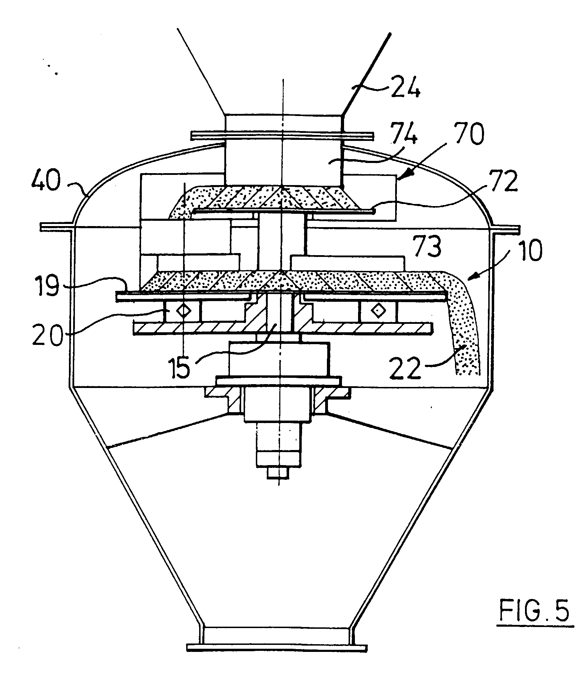

Fig. 5 zeigt eine bevorzugte Weiterbildung der erfindungsgemäßen Sektoren-Dosiervorrichtung 10, bei der zur Vergleichmäßigung der Zufuhr von Gut 22 zum Meßteller 19 ein Zufuhrdrehteller 72 über einen Wellenstummel 73 der Welle 15 angetrieben wird. Der sich so oberhalb des Meßtellers 19 drehende Drehteller 72 wird über einen Schacht 74 wiederum von dem Behälter 24 beschickt, so daß auch hier eine Vergleichmäßigung der Gutzufuhr zum Meßteller 19 erzielt wird.

Es ist ersichtlich, daß alle Zusatzvorrichtungen, die ggfs. modular anbaubar sind, von einer einzigen Welle angetrieben werden können.

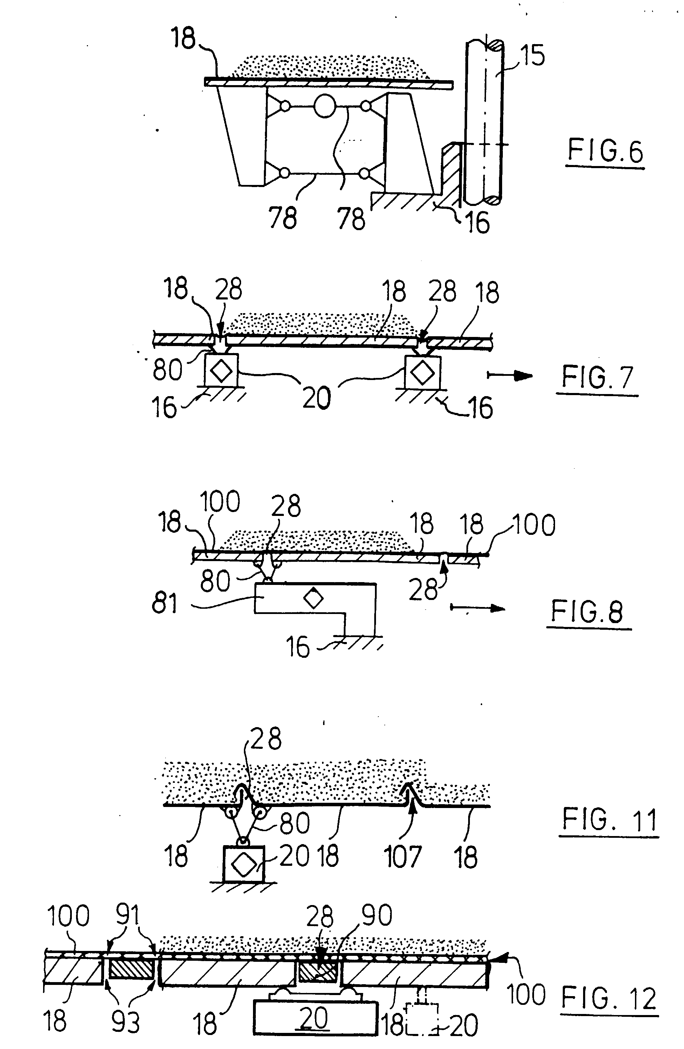

In den Fig. 6 bis 10 sind verschiedene Alternativen für die in den vorstehenden Figuren nur schematisch gezeigten Kraftmeßvorrichtungen (oder Lastzellen) 20 veranschaulicht. Im Prinzip können alle bei üblichen Plattformwaagen angewendeten Kraftmeßvorrichtungen zum Einsatz kommen, die eine Massebestimmung des ggfs. unregelmäßig auf einem Sektor 18 liegenden Gutes 22 gestatten.

Fig. 6 zeigt (entsprechend dem Pfeil A in Fig. 2) im Längsschnitt entlang einer Entkoppelungsstelle 28 zwischen Sektoren 18 eine Abstützanordnung eines Sektors 18 mit einem Parallellenkersystem 78. Dieses gewährleistet eine exakte Führung bei der Vertikalbeweglichkeit der einzelnen Sektoren 18.

In Fig. 7 (entsprechend dem Pfeil B in Fig.2 in Art einer Abwicklung) ist die gemeinsame Lagerung der Sektoren 18 mit ihren Entkoppelungsstellen 28 auf je zwei Kraftmeßzellen 20 verdeutlicht, wobei diese jeweils symmetrisch zur Entkoppelungsstelle 28 angeordnet sind und mit einem Lenker- oder Hebelpaar 80 mit den Rändern der Sektoren 18 verbunden sind. Die Entkoppelungsstelle 28 ist hier beispielsweise durch eine flexible, dünne Membran zwischen den biegesteifen Sektoren 18 gebildet. Dadurch wird sichergestellt, daß kein Schüttgut in die Radialschlitze zwischen den Sektoren hineinfällt.

Fig. 8 zeigt eine Ausführungsform, bei der sich jeweils zwei Sektoren 18 im Bereich ihrer gemeinsamen Trennstelle 28 wiederum mittels eines Hebelpaares 80 auf eine gemeinsame Kraftmeßvorrichtung 20, hier in Form einer Scherkraftmeßzelle 81 abstützen.

Die Fig. 9 und 10 zeigen im Längsschnitt (entsprechend dem Pfeil A in Fig. 2) eine zweckmäßige Ausführungsform der Sektoren-Dosiervorrichtung 10, bei der auf der Oberseite des Meßtellers 19 eine sich über alle Sektoren 18 durchgehend erstreckende Abdeckung 100 z. B. eine Gummidecke oder ein entsprechend dünnes, elastisches Stahlblech aufgebracht und befestigt ist. Durch diese dünne, membranartige Gestaltung wird somit jeweils eine Entkoppelungsstelle 28 zwischen benachbarten Sektoren gebildet. Der innere Rand der Gummidecke bzw. des dünnen Blechs 100 ist in einem Block 102 eingeklemmt, der am Umfang der Welle 15 befestigt ist. Hierdurch ergibt sich eine äußerst einfache radiale Fixierung der Sektoren 18, ohne daß die vertikale Beweglichkeit beeinflußt wird. Die Sektoren 18 können dann ohne besondere Führungen auf der jeweiligen Kraftmeßvorrichtung 20 an der Entkoppelungsstelle 28 zwischen benachbarten Sektoren 18 aufgesetzt sein.

Wie aus Fig. 10 ersichtlich, kann der Drehteller 16 einen hochgezogenen Außenrand 104 aufweisen und die Gummidecke bzw. das Blech 100 kann sich über diesen Rand erstrecken und an dessen Oberkante befestigt sein. Auch kann die ringförmige Gummidecke 100 einen hochgezogenen Außen- und/oder Innenrand aufweisen, um das Herabfallen von zu dosierendem Gut vor dem Abwurfbereich zu verhindern. In diesem Falle kann die Entleerungsstation E statt durch einen Abstreifer durch eine Absaugleitung gebildet sein.

Es sei nun noch auf die Fig. 11 und 12 Bezug genommen, die in einer Art Abwicklung den Übergang, nämlich die Trenn- oder Entkoppelungsstelle 28 zwischen den einzelnen Sektoren 18 veranschaulichen.

So zeigt Fig. 12 die durchgehende Gummimatte als Abdeckung 100, die die Schlitze zwischen den einzelnen Sektoren 18 überdeckt. Ist auf die Sektoren 18 eine dünne Stahlplatte aufgelegt oder bestehen diese aus einer Stahlplatte mit Verdünnungen, Schlitzen oder Einfräsungen zur Bildung der Entkoppelungsstellen 28, dann sind die radialen Ränder der Sektoren 18 derart flexibel verbunden, daß zwar ein Eindringen von Gut in die Schlitze 28 verhindert wird, daß aber andererseits die voneinander unabhängige Vertikalbeweglichkeit der Sektoren 18 erhalten bleibt. Fig. 11 zeigt beispielsweise eine Art Einhakverbindung 107.

In Fig. 12 ist eine besonders vorteilhafte Ausführung des Meßtellers 19 mit der Entkoppelungsstelle 28 gezeigt, in die ein linealartiger Zwischensteg 90 eingesetzt ist. Der Zwischensteg 90 ist mit der flexiblen Abdeckung 100 verbunden, beispielsweise bei einer Gummi-Abdeckung 100 mit dieser verklebt oder bei einer Blech-Abdeckung 100 mit dieser verschraubt. Hierdurch gleichen sich Höhenunterschiede zwischen den einzelnen Sektoren 18 z. B. bei unterschiedlich starker Belastung der einzelnen Sektoren 18 besser aus und die Zugbelastung auf die durchgehende Gummimatte 100 und damit evtl. verursachte Meßungenauigkeiten werden geringer. Insbesondere ergibt diese Einfügung von biegesteifen Zwischenstegen 90 in die flexiblen Entkoppelungsstellen 28 eine Gewichtsverteilung und exakte Entkoppelung zwischen zwei benachbarten Sektoren 18, da hierdurch in der Abdeckung 100 jeweils im Spalt 93 zwischen Sektor 18 und Zwischensteg 90 eine weitere Momentan-Pendelachse 91 gebildet wird. Der Zwischensteg 90 kann, wie in Fig. 13 in Draufsicht angedeutet, leistenförmig oder ebenfalls sektorenförmig sein.

Bezüglich der elektronischen Steuerung und Auswertung der erfindungsgemäßen Vorrichtung wird auf die bereits genannte DE-C-32 17 406 hingewiesen. Das dort beschriebene Prinzip ist bei der erfindungsgemäßen Dosiervorrichtung in entsprechender Weise anwendbar, wobei lediglich eine Zeitgabe zur aufeinanderfolgenden, intermittierenden Aktivierung der Kraftmeßvorrichtungen 20 (Fig. 1) beim jeweiligen Durchlauf durch die Meßstation M bzw. die Tara-Station T eingefügt werden muß, damit der an der Tara-Station T für einen Sektor 18 festgestellte Tarawert von dem Bruttomeßwert abgezogen werden kann, der zuvor für den Sektor 18 an der Meßstation M gemessen wurde.

Lediglich beispielhaft sei nachstehend anhand der Figuren 13 und 14 der Aufbau und die Funktion einer derartigen Steuerung beschrieben.

in Fig. 13, links, ist der mechanische Aufbau der erfindungsgemäßen Dosiervorrichtung ähnlich demjenigen der Figuren 1 und 2 lediglich schematisch angedeutet, wobei in Abwandlung des ersten Ausführungsbeispiels der Drehteller 16 über eine sich nach oben erstreckende Welle 15 von einem Motor 12 über ein Getriebe 14 angetrieben wird. Die vier Sektoren 18 stützen sich über je eine Lastzelle 201, 202, 203 und 204 auf dem Drehteller 16 ab. Zwischen den einzelnen Sektoren 18 ist jeweils ein Zwischensteg 90 eingesetzt, der auch sektorenförmig gestaltet sein kann und mit der hier nicht dargestellten oberen Abdeckung 100 verbunden ist.

Fig. 13, rechts, zeigt die elektrische Schaltungsanordnung für die Lastzellen 201 bis 204, deren Ausgänge entsprechend über Verstärker 224 an Analog-Digitalkonverter 226 angeschlossen sind, deren Ausgänge über eine Auswahlschaltung 228 nach Art eines Multiplexers an die eigentliche Auswerteschaltung 230 angeschlossen sind, die der Schaltungsanordnung gemäß der genannten DE-C-32 17 406 prinzipiell entspricht.

Da die Lastzellen 20 (Fig. 1) bzw. 201 bis 204 (Fig. 13) mit dem Drehteller 16 rotieren, erfolgt die Signalabnahme von den Lastzellen in dem Fachmann allgemein bekannter Weise induktiv oder aber über eine nicht gezeigte Schleifringsektoren/Bürstenkombination, die an der Welle 15 angebracht ist.

Bei der in der Fig. 13 gezeigten Schaltungsanordnung wird die Zeitgabe einmal mittels einer auf der Welle 15 befestigten Taktscheibe 218 erreicht, die mit einem Zahn versehen ist, bei dessen Vorbeilauf an einem Sensor 220 pro Umdrehung 240 (Fig. 14) ein Impuls 241 (Fig. 14) erzeugt wird, der einer Zeitgabeschaltung 222 zugeführt wird.

Auf der Welle des Motors 12 sitzt ferner ein Zahnrad 216, von dem ein weiterer Sensor 211 beispielsweise tausend Impulse 242 (Fig. 14) pro Umdrehung der Welle 15 abnimmt.

Auf der Basis der Impulse 241 und 242 werden durch die Zeitgabeschaltung 222 an die Auswahlschaltung 228 Impulse 251 bis 254 angelegt, die zur Durchschaltung der Ausgangssignale der Lastzellen 201 bis 204 zu einem Zeitpunkt dienen, zu dem der jeweilige Sektor 18 sich an der Meßstation M (vgl. auch Fig. 2) befindet. Den Auswahlimpulsen 251 bis 254 analoge Impulse 263,264,261,262 aktivieren nacheinander mit einer Versetzung um 180° jeweils diejenigen der Lastzellen 201 bis 204, die sich an der Tarastation T befindet.

In der Auswerteschaltung 230 wird laufend der an der Tarastation T gemessene Tarawert von dem zuvor für den entsprechenden Sektor an der Meßstation M gemessenen Bruttowert abgezogen und der sich ergebende Nettowert, d. h. die Masse des auf dem entsprechenden Sektor geförderten Materials zur weiteren Auswertung zur Verfügung gestellt, wie sie in der genannten DE-C-32 17 406 im einzelnen beschrieben ist. Insbesondere kann über Leitung 231 ein Sollwert für den Materialdurchsatz angelegt werden, über eine Anzeige 234 kann der jeweilige Istwert angezeigt werden und über eine Regelung 232 kann die Drehzahl des Motors 12 entsprechend der Abweichung zwischen Sollwert und Istwert geregelt werden.

Mittels der Vielzahl von Impulsen 242 ist auch eine Mehrfachmessung für jeden Sektor und jede Position möglich. Anstelle eines Impulses 241 pro Umdrehung können auch vier Impulse durch entsprechende Zähne am Zahnrad 218 erzeugt werden.

Abschließend sei darauf hingewiesen, daß die verschiedenen Modifikationen der einzelnen Ausführungsbeispiele zum großen Teil entsprechend bei den anderen Ausführungsbeispielen angewandt werden können, soweit dies vom Fachmann als zweckdienlich erachtet wird. Dies gilt insbesondere für die Zufuhr und Abförderung, wie sie im Zusammenhang mit dem ersten Ausführungsbeispiel ausführlich erläutert wurde.

## Patentansprüche

1. Gravimetrische Dosiervorrichtung (10) für Schüttgüter, mit einem um eine Vertikalachse (15) rotierenden Rotor (19), einer Beschickungsstation (B) zur Zuführung von Gut zu dem Rotor, einer gegenüber der Beschickungsstation (B) versetzten Entleerungsstation (E) und mindestens einer Kraftmeßvorrichtung (20), mit der die Masse des jeweils vom Rotor über eine zwischen der Beschickungsstation (B) und der Entleerungsstation (E) befindliche Meßstrecke (M) geförderten Guts bestimmt wird, wobei der Rotor (19) durch nachgiebige, vorzugsweise radial verlaufende Entkoppelungsstellen (28) in mindestens zwei unabhängig voneinander, zumindest geringfügig vertikal bewegbare, vorzugsweise gleich große Sektoren (18) unterteilt ist, und die Kraftmeßvorrichtung (20) jeweils unterhalb der Sektoren (18) angeordnet ist,
dadurch gekennzeichnet, daß
die Kraftmeßvorrichtung (20) so angeordnet ist, daß sie die jeweilige Entkoppelungsstelle (28) zwischen benachbarten Sektoren (18) überbrückt.

2. Gravimetrische Dosiervorrichtung (10) für Schüttgüter, mit einem um eine Vertikalachse (15) rotierenden Rotor (19), einer Beschickungsstation (B) zur Zuführung von Gut zu dem Rotor, einer gegenüber der Beschickungsstation (B) versetzten Entleerungsstation (E) und mindestens einer Kraftmeßvorrichtung (20), mit der die Masse des jeweils vom Rotor über eine zwischen der Beschickungsstation (B) und der Entleerungsstation (E) befindliche Meßstrecke (M) geförderten Guts bestimmt wird, wobei der Rotor (19) durch nachgiebige, vorzugsweise radial verlaufende Entkoppelungsstellen (28) in mindestens zwei unabhängig voneinander, zumindest geringfügig vertikal bewegbare, vorzugsweise gleich große Sektoren (18) unterteilt ist, und die Kraftmeßvorrichtung (20) jeweils unterhalb der Sektoren (18) angeordnet ist,
dadurch gekennzeichnet, daß
die Kraftmeßvorrichtung (20) symmetrisch zur Entkoppelungsstelle (28) angeordnet ist und über ein Hebelpaar (80) mit den sich gegenüberliegenden Randbereichen zweier benachbarter Sektoren (18) verbunden ist.

3. Vorrichtung nach Anspruch 1 oder 2,
dadurch gekennzeichnet, daß
wenigstens vier Sektoren (18) vorgesehen sind und daß zwischen Entleerungsstation (E) und Beschickungsstation (B) eine Tara- oder Sektorleergewichtsmeßstrecke (T) angeordnet ist, deren Tara-Meßwert einer Auswerteschaltung (230) zur Bestimmung der Netto-Masse des geförderten Gutes (22) zugeführt wird.

4. Vorrichtung nach Anspruch 1, 2 oder 3,
dadurch gekennzeichnet, daß
an der Entleerungsstation (E) über dem Rotor (19) ein Abstreifer (26) oder eine Absaugvorrichtung und ggfs. weitere Abfördermittel (44, 46; 60, 68) vorgesehen sind.

5. Vorrichtung nach einem der vorhergehenden Ansprüche,
dadurch gekennzeichnet, daß
der Rotor (19) einen Drehteller (16) aufweist, der von einem Motor (12) über die Achse (15) angetrieben wird und die einzelnen Sektoren (18) auf dem Drehteller (16) über die Kraftmeßvorrichtungen (20) abgestützt sind.

6. Vorrichtung nach einem der vorhergehenden Ansprüche,
dadurch gekennzeichnet, daß
die Sektoren (18) jeweils über eine Lenkeranordnung (78) abgestützt ist.

7. Vorrichtung nach einem der vorhergehenden Ansprüche,
dadurch gekennzeichnet, daß
die Sektoren (18) von einer Gummimatte (100) abgedeckt sind.

8. Vorrichtung nach einem der vorhergehenden Ansprüche,
dadurch gekennzeichnet, daß
die Entkoppelungsstelle (28) durch einen radial verlaufenden Schlitz gebildet ist und mit einer elastischen Abdeckung (100) abgedeckt ist.

9. Vorrichtung nach einem der vorhergehenden Ansprüche,
dadurch gekennzeichnet, daß
die Entkoppelungsstelle (28) und die elastische Abdeckung (100) zugleich durch eine flexible Verdünnung der Sektorenplatte (18) gebildet ist.

10. Vorrichtung nach einem der vorhergehenden Ansprüche,
dadurch gekennzeichnet, daß
in den von einer elastischen Abdeckung (100) überdeckten Entkoppelungsstellen (28) jeweils ein Zwischensteg (90) eingefügt ist, der an seiner Oberseite mit der elastischen Abdeckung (100) verbunden ist.

## Claims

1. A gravimetric dosing device (10) for bulk materials, including a rotor (19) rotating about a vertical shaft (15), a charging station (B) for feeding material to said rotor, a discharging station (E) being offset opposite to said charging station (B), and at least one force measuring device (20) by means of which there is determined the mass of material respectively fed by said rotor via a measuring section (M) provided between said charging station (B) and said discharging station (E), wherein said rotor (19), by means of flexible, preferably radially extending decoupling stations (28) is subdivided in at least two sections (18), preferably of equal size and adapted to be vertically movable independently from each other at least to a small extent, and the force measuring device (20) is respectively arranged below said sections (18),
characterized in that
the force measuring device (20) is arranged to bridge the respective decoupling station (28) between neighbouring sections (18).

2. A gravimetric dosing device (10) for bulk materials, including a rotor (19) rotating about a vertical shaft (15), a charging station (B) for feeding material to said rotor, a discharging station (E) being offset opposite to said charging station (B), and at least one force measuring device (20) by means of which there is determined the mass of material respectively fed by said rotor via a measuring section (M) provided between said charging station (B) and said discharging station (E), wherein said rotor (19), by means of flexible, preferably radially extending decoupling stations (28) is subdivided in at least two sections (18), preferably of equal size and adapted to be vertically movable independently from each other at least to a small extent, and the force measuring device (20) is respectively arranged below said sections (18), characterized in that the force measuring device (20) is arranged symmetrically with respect to the decoupling station (28) and is connected to the opposing fringe areas of two neighbouring sections (18) via a pair of levers (80).

3. The device of claim 1 or 2, characterized in that there are provided at least four sections (18) and that a tare or section deadweight measuring section (T) is located between said discharging station (E) and said charging station (B), the tare measurement of said section (T) being fed to an evaluation circuit (230) to determine the net mass of the conveyed material (22).

4. The device of claim 1, 2, or 3, characterized in that a stripper (26) or a suction means and, if desired, further discharging means (44, 46; 60, 68) are provided above said rotor (19) at said discharging station (E).

5. The device of any of the preceding claims, characterized in that the rotor (19) comprises a rotary disk (16) driven by a motor (12) via the shaft (15) and supporting each of said sections (18) via said force measuring devices (20).

6. The device of any of the preceding claims, characterized in that the sections (18) each are supported via a guide assembly (78).

7. The device of any of the preceding claims, characterized in that the sections (18) are covered by a rubber mat (100).

8. The device of any of the preceding claims, characterized in that the decoupling station (28) is formed by a radially extending slot and is covered by a resilient cover (100).

9. The device of any of the preceding claims, characterized in that both the decoupling station (28) and the resilient cover (100) are formed by a flexible recess in the section plate (18).

10. The device of any of the preceding claims, characterized in that an intermediate bridge (90) each is interposed between the decoupling stations (28) covered by a resilient cover (100), said bridge (90) being connected at its top side with said resilient cover (100).

## Revendications

1. Dispositif de dosage gravimétrique (10) pour matériaux en vrac, comprenant un rotor (19) rotatif autour d'un axe vertical (15), un poste de chargement (B) pour l'apport de matériau au rotor, un poste de vidage (E) décalé par rapport au poste de chargement (B) et au moins un dispositif dynamométrique (20), qui permet de déterminer la masse du matériau respectivement transporté par le rotor sur une section de mesure (M) se trouvant entre le poste de chargement (B) et le poste de vidage (E), le rotor (19) étant divisé, par des points de désaccouplement flexibles (28) s'étendant de préférence radialement, en au moins deux secteurs (18) mobiles verticalement, au moins légèrement, indépendamment entre eux, de préférence de même taille, et le dispositif dynamométrique (20) étant respectivement disposé en dessous des secteurs (18),
**caractérisé** en ce que le dispositif dynamométrique (20) est disposé de telle sorte qu'il couvre le point de désaccouplement respectif (28) entre des secteurs voisins (18).

2. Dispositif de dosage gravimétrique (10) pour matériaux en vrac, comprenant un rotor (19) rotatif autour d'un axe vertical (15), un poste de chargement (B) pour l'apport de matériau au rotor, un poste de vidage (E) décalé par rapport au poste de chargement (B) et au moins un dispositif dynamométrique (20), qui permet de déterminer la masse du matériau respectivement transporté par le rotor sur une section de mesure (M) se trouvant entre le poste de chargement (B) et le poste de vidage (E), le rotor (19) étant divisé, par des points de désaccouplement flexibles (28) s'étendant de préférence radialement, en au moins deux secteurs (18) mobiles verticalement, au moins légèrement, indépendamment entre eux, de préférence de même taille, et le dispositif dynamométrique (20) étant respectivement disposé en dessous des secteurs (18),
**caractérisé** en ce que le dispositif dynamométrique (20) est disposé symétriquement au point de désaccouplement (28), et est relié par une paire de leviers (80) aux régions de bord en vis-à-vis de deux secteurs voisins (18).

3. Dispositif selon la revendication 1 ou 2, **caractérisé** en ce qu'au moins quatre secteurs (18) sont prévus, et en ce qu'une section (T) de mesure de tare ou encore de poids à vide de secteur est disposée entre le poste de vidage (E) et le poste de chargement (B), dont la valeur de mesure de tare est apportée à un montage d'interprétation (230) pour déterminer la masse nette du matériau transporté (22).

4. Dispositif selon une des revendications 1 à 3, **caractérisé** en ce qu'un racloir (26) ou un dispositif d'aspiration, et éventuellement d'autres moyens de transport d'évacuation (44, 46 ; 60, 68), sont prévus au-dessus du rotor (19) au poste de vidage (E).

5. Dispositif selon une des revendications précédentes,
**caractérisé** en ce que le rotor (19) présente un plateau tournant (16), qui est entraîné par un moteur (12) par l'intermédiaire de l'axe (15), et les secteurs individuels (18) sont soutenus sur le plateau tournant (16) par l'intermédiaire des dispositifs dynamométriques (20).

6. Dispositif selon une des revendications précédentes,
**caractérisé** en ce que les secteurs (18) sont respectivement soutenus par l'intermédiaire d'une tringlerie articulée (78).

7. Dispositif selon une des revendications précédentes,
**caractérisé** en ce que les secteurs (18) sont recouverts d'un tapis en caoutchouc (100).

8. Dispositif selon une des revendications précédentes,
**caractérisé** en ce que le point de désaccouplement (28) est formé par une fente s'étendant radialement et est recouvert d'un élément de recouvrement élastique (100).

9. Dispositif selon une des revendications précédentes,
**caractérisé** en ce que le point de désaccouplement (28) et l'élément de recouvrement élastique (100) sont simultanément formés par un amincissement flexible de la plaque de secteur (18).

10. Dispositif selon une des revendications précédentes,
**caractérisé** en ce qu'une nervure intermédiaire respective (90), qui est assemblée sur sa face supérieure à l'élément de recouvrement élastique (100), est intercalée dans les points de désaccouplement (28) recouverts par un élément de recouvrement élastique (100).
